# EUROPEAN PATENT APPLICATION

(11) **EP 1 207 607 A1**
(43) Date of publication of application: **22.05.2002**
(21) Application number: 01610119.8
(22) Date of filing: 20.11.2001
(51) Int. Cl.: H02G 3/30, H02G 1/00

(54) **A building system for providing walls with concealed ducts**

(30) Priority: 20.11.2000 DK 200001742
(71) Applicant: LK A/S, DK-2750 Ballerup (DK)
(72) Inventor: Madsen, Kaj Fischer, 2950 Vedbaek (DK)
(74) Representative: Wittrup, Flemming

(57) **Abstract**

A building system for providing walls with concealed ducts comprises studs (15) for supporting wall plates (18) and comprises duct members (17) for constructing a duct which is concealed in the finished wall. When the duct member (17) and/or the stud (15) is reduced in depth (transversely to the finished wall), ducts and studs may pass each other, without the wall losing its strength, and without the field of use of the duct being reduced noticeably.

## Description

The invention relates to a building system for providing walls with concealed ducts for receiving electrical installations. The building system comprises a first type of structural parts which are used for building the ducts, and also a second type of structural parts which are used for building a wall structure, e.g. studs and plates.

The invention is useful in connection with new constructions and renovation of partition walls and rear walls. In recent years the number of wires in concealed electrical installations has increased strongly because of the great increase in inter alia intelligent control of both power current devices and weak current devices. Thus, it is no longer sufficient just to arrange a single wire externally on the wall when renovating old buildings. If such installations are to be up-to-date, it is necessary to make a concealed duct system for receiving the many wires. This has so far been difficult with the known structural parts in case of renovation.

The object of the invention is to provide a building system which, also in connection with renovation, allows a concealed duct system to be provided easily, without the depth of the renovated wall exceeding known standard measures.

This object is achieved in that at least some of said structural parts have a reduced depth, measured transversely to the wall, at predetermined points to allow other structural parts to pass.

Duct parts and wall parts may thus pass each other because of the reduced depth. The reduced depth of the structural parts constitutes a departure from the traditional dimensioning of these parts, and the invention is based on the finding that the normal duct depth is dictated by the electrical equipment which is to extend into the duct, but that the duct depth may be reduced noticeably at the points where only wires are run. The passage between ducts and wall structural parts is arranged precisely there. The invention is also based on the fact that, locally, a reduced depth of wall structural parts may be provided, without the strength of the wall being weakened noticeably.

To provide a reduction in the duct depth it is expedient to make a relatively short duct reducing member which may be inserted into the duct length where other structural parts, e.g. studs or downpipes, are to be able to pass. In an embodiment, the duct reducing member has a depth which corresponds to a wall plate thickness, which requires a wall with a double layer of plates. It has become ever more popular to construct e.g. plaster walls with two plates externally on each other, since this is a very inexpensive way of achieving an effective sound insulation. In an embodiment, the external plate covers the duct system, while the internal wall is interrupted where the duct system is arranged.

The studs for the wall structure may also be reduced, which is expedient in particular when steel studs are involved, which are advantageous in terms of strength as well as working over wood, although the use of wooden studs is also comprised by the invention. The strength conditions play a role particularly if depth reduction is established on the opposite side of the stud, as the ducts for the electrical installations should desirably be disposed at the same height above the floor on both sides of the wall.

The measures of the depth reduction of the various structural parts may be adapted to each other in various ways depending on whether the wall is covered with one or two layers of plates.

The invention will be explained more fully by the following description of some embodiments with reference to the drawing, in which
figure 1 shows a first embodiment of the building system according to the invention,
figure 2 shows a second embodiment of the building system according to the invention,
figure 3 shows a third embodiment of the building system according to the invention, while
figure 4 shows a steel stud with a depression for receiving a duct member.

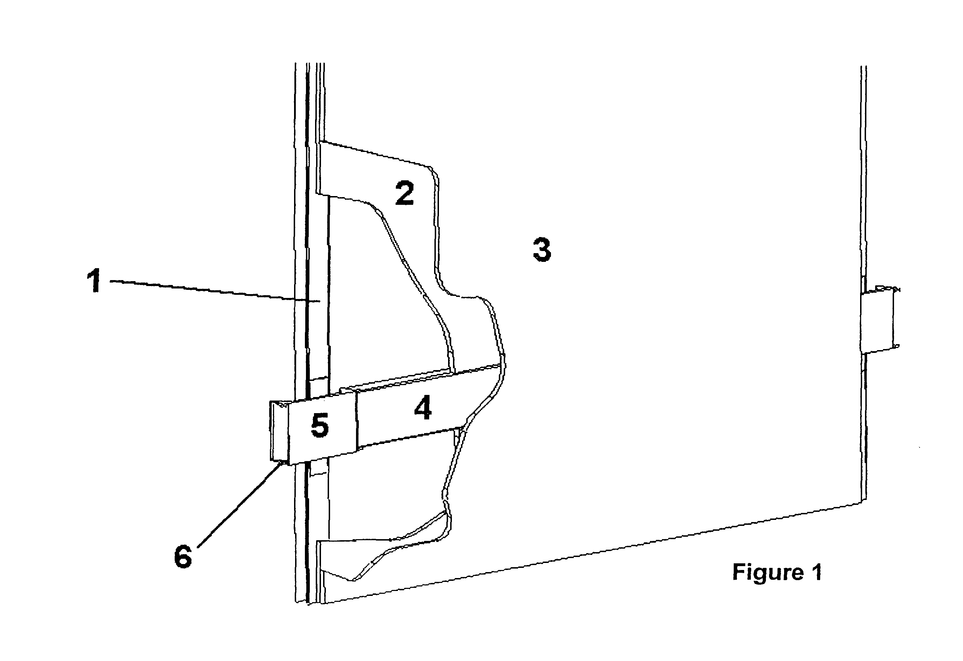

Figure 1 shows a steel stud which, together with other studs (not shown), forms the basis for wall plates 2 and 3. The plates may be plaster plates, and it will be well-known that the use of plaster walls having two layers of plaster on both sides is becoming ever more popular. This is the most inexpensive possibility of achieving a greater strength and sound absorption. Further, figure 1 shows a duct 4 having a duct connecting member 5 which has a reduced depth, measured transversely to the stud 1, relative to the duct 4. In the embodiment shown, the depth of the duct connecting member 5 corresponds to the thickness of the plaster plate 2, which means that the external plate 3 terminates the wall and adjoins the duct 4, so that it is easy, by drilling through the plate 3, to get access to the duct 4 to mount e.g. electrical installation equipment. The electrical installation equipment has a certain minimum mounting depth, and the invention is based on the circumstance that the duct depth corresponding thereto is much greater than is necessary to run wires and cables through the ducts. The depth of the duct connecting member is just sufficient for the necessary wiring to be run through. The plates 2 and 3 need not necessarily be of the same thickness, and by allowing the rear plate 3 to be relatively thicker than the front plate 3 the necessary space through the duct connecting member 5 may be achieved. The duct 4 and the duct connecting member 5 are interconnected e.g. by means of connecting flaps 6, which are adapted to cooperate with switching means in the ducts.

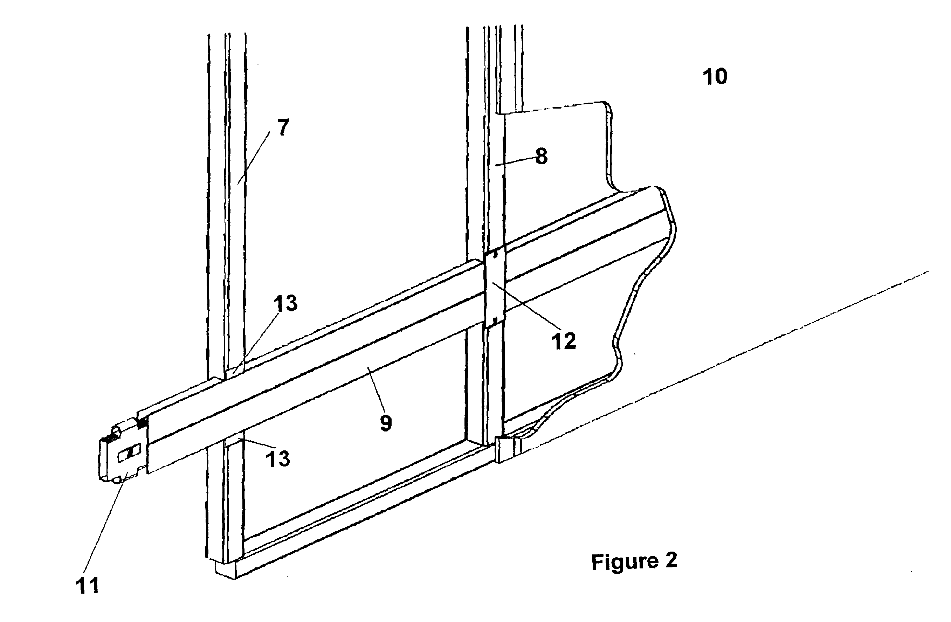

Figure 2 shows a second embodiment, which uses wooden studs 7 and 8 that are formed with grooves for receiving a duct 9. The grooves are made so deep that the duct 9 will be flush with the outer side of the studs, thereby allowing a plate 10 to be mounted on the studs, said duct 9 adjoining the rear side of the plate 10. As mentioned before, this is expedient in the mounting of electrical installation equipment. A connecting member for the duct 9 is indicated at 11.

The embodiment shown in figure 2, in which there is no reduction of the duct 9, is based on the finding that the temporary weakening of the stud has no practical importance once the wall plates have been mounted, as the plates, in particular if a double layered covering is used, ensure that the wall has a sufficient strength. However, a metal plate 12 positioned in depressions 13 is shown in figure 2. The plates 12 may be secured by means of screws and impart a temporary strengthening to the wall as long as the wall plates have not been mounted, but primarily serve the purpose of making it impossible to screw screws through the duct 9 when the wall plates are mounted. This is particularly relevant if a further plate is arranged externally on the plate 10.

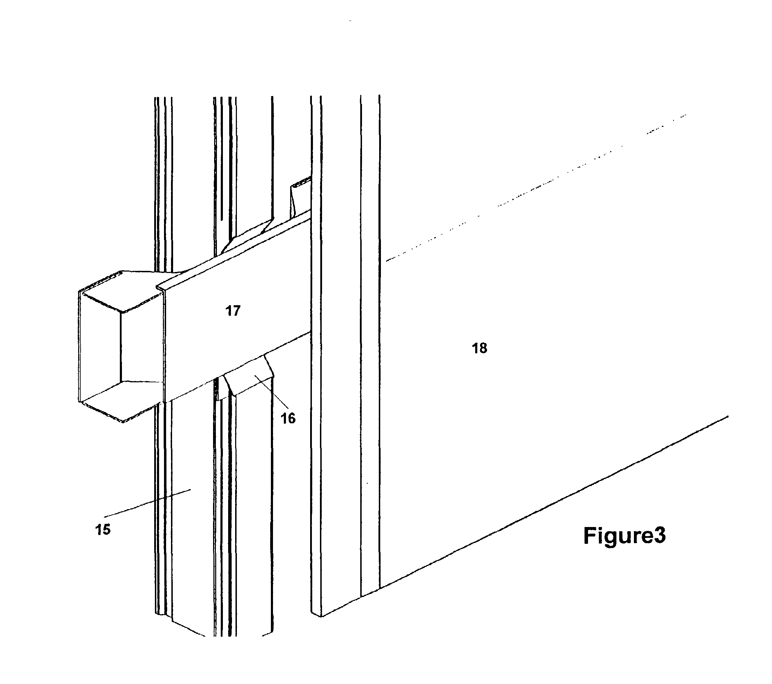

Figure 3 shows a third embodiment which is something between the embodiments shown in figures 1 and 2. In the embodiment shown in figure 3, both stud and duct are reduced in depth in the area where the two structural parts are to pass each other. Figure 3 shows a steel stud 15 which has a depressed area 16 adapted to receive the reduced part of a duct connecting member 17. It is hereby possible to ensure that the wall plate 18 is flush with the duct and the stud, thereby also enabling a single layer covering to be made without having to weaken the stud 15 with a depression which is just as deep as is necessary in the part of the duct where it must be possible to mount electrical installation equipment.

It will then be appreciated that the depth reduction of the duct, the depression depth in the steel stud or the milling depth in the wooden stud may be adapted to each other and in dependence on whether a single layer or a multi-layered covering is used, and in dependence on the thickness of the rear plate. This provides a very flexible building system which may be adapted to all conditions, and thereby the system is also suitable for the renovation of existing building parts.

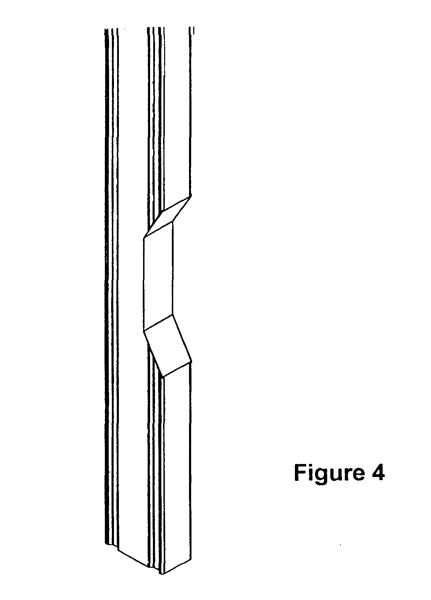

Figure 4 shows a steel stud 19 whose width is locally reduced at 20. The reduction may be provided in the manufacture of the stud or by means of a tool at the building site.

## Claims

1. A building system for providing walls with concealed ducts, in particular for receiving electrical installations, and comprising a first type of structural parts for constructing a plurality of ducts and comprising a second type of structural parts for constructing a wall structure for receiving said ducts, **characterized in that** at least some of said structural parts have a reduced depth, measured transversely to the wall, at predetermined points to allow other structural parts to pass.

2. A building system according to claim 1, **characterized in that** the first type of structural parts comprises a duct reducing member, which has a reduced depth relative to a duct member, and which is connectible with the duct member.

3. A building system according to claim 2, wherein the second type of structural parts comprises wall plates, **characterized in that** the depth of the duct reducing member corresponds to a wall plate thickness.

4. A building system according to claim 1, wherein the second type of structural parts comprises wall plates and studs for supporting the wall plates, **characterized in that** the studs have a reduced depth at predetermined points for the ducts to pass transversely to the studs at these points.

5. A building system according to claim 4, **characterized in that** the depth is reduced on opposed sides of the stud, opposite each other.

6. A building system according to claim 4 or 5, **characterized in that** the depth is reduced corresponding to normal duct depth.

7. A building system according to claims 2 and 4, **characterized in that** the depth is reduced corresponding to the depth of the duct reducing member.

8. A building system according to claim 6 or 7, **characterized in that** the depth is reduced corresponding to normal or reduced duct depth minus a plate thickness.

9. A building system according to claims 4 - 8, **characterized in that** the studs are of wood in which a groove is produced.

10. A building system according to claims 4 - 8, **characterized in that** the studs are of metal, and that the width is reduced locally.
